# FASCICULE DE BREVET EUROPEEN

(11) **EP 3 369 601 B1**
(45) Date de publication et mention de la délivrance du brevet: **04.03.2020**
(21) Numéro de dépôt: 18153012.2
(22) Date de dépôt: 23.01.2018
(51) Int. Cl.: B60K 20/02, B60K 20/04, B60K 20/08

(54) **SYSTÈME DE FIXATION D'UN BOÎTIER SUR UN ÉLÉMENT DE STRUCTURE, BOÎTIER DE COMMANDE, ET PROCÉDÉ DE MONTAGE CORRESPONDANT**
SYSTEM ZUR BEFESTIGUNG EINES GEHÄUSES AUF EINEM STRUKTURELEMENT, STEUERGEHÄUSE UND ENTSPRECHENDES MONTAGEVERFAHREN
SYSTEM FOR ATTACHING A BOX TO A STRUCTURAL ELEMENT, CONTROL BOX, AND CORRESPONDING MOUNTING METHOD

(30) Priorité: 24.02.2017 FR 1770179
(43) Date de publication de la demande: 05.09.2018
(73) Titulaire: RENAULT s.a.s., 92100 Boulogne-Billancourt (FR)
(72) Inventeur: BLIN, Fabrice, 78114 Magny les Hameaux (FR)

(56) Documents cités:
- EP-A2- 1 375 973
- JP-Y1- S4 518 805
- US-A- 4 306 708
- US-A- 4 711 135

## Description

La présente invention concerne la fixation des boîtiers de commande de boîte de vitesses dans l'habitacle d'un véhicule, sur la caisse de celui-ci, ou sur un élément de structure, tel qu'un renfort de tunnel sur caisse.

Plus précisément, elle a pour objet un système de fixation d'un boîtier sur un élément de structure, comportant un collet métallique de réception d'une vis de fixation au travers d'un orifice de fixation de l'élément de structure, qui comprend une partie cylindrique insérée dans un tampon amortisseur de vibrations logé à l'intérieur du boîtier.

La présente invention a également pour objet un boîtier de commande de vitesses comportant au moins un pied de fixation sur un élément de structure de véhicule comportant un système de fixation.

Elle a enfin pour objet un procédé de montage d'un boîtier, dont les pieds de fixation sont reçus sur des vis orientées vers le haut ou vers le bas, au travers d'orifices de fixation d'un élément de structure de véhicule.

Les boîtiers de commande de vitesses montés dans l'habitacle, permettent de monter et de supporter le levier, ou sélecteur de vitesses, mis à disposition du conducteur, « au plancher », ou sur une console plus ou moins surélevée, à proximité de son siège.

Pour des raisons de structure et d'architecture, la caisse forme souvent un tunnel central présentant globalement en coupe transversale une section en U inversé, entre les sièges gauche et droite du véhicule. Le tunnel est partie intégrante de la caisse, ou bien réalisé par un renfort de caisse rapporté sur celle-ci. Il offre généralement un espace suffisant pour loger un dispositif de commande de vitesses, incluant une embase de support et d'articulation du levier ou du sélecteur de vitesses, et certains des éléments de mécanisme assurant la liaison mécanique du levier avec la boîte. Le dispositif concerné participe à la commande des vitesses, en transformant les déplacements du levier, en déplacements fonctionnels, de câbles ou tringles de commande, actionnant les mécanismes internes de la boîte de vitesses.

Les vibrations des trains roulants et du groupe motopropulseur remontent au travers du boîtier de commande, jusqu'au levier de vitesses. Elles sont relativement importantes, et nécessitent l'introduction d'éléments amortisseurs, par exemple du type « *silent block* », entre le boîtier et son support, renforts de caisse, ou caisse proprement dite du véhicule.

Le boîtier de commande de vitesses requiert un positionnement précis sur la caisse pour garantir les jeux de fonctionnement et d'aspect entre la commande de boîte et la console centrale, la planche de bord ou tout autre élément d'habillage en proximité avec la commande. A cette condition, le levier peut assurer la commande effective des changements de vitesses avec la fiabilité requise par la transmission de ses mouvements, jusqu'aux mécanismes internes de la boîte. Dans le cas où des éléments de filtration vibratoires sont introduits entre la caisse et le boîtier, il n'est pas possible d'indexer le boîtier par l'intermédiaire de formes issues du boîtier, du fait des mouvements relatifs entre la caisse et le boîtier. Il n'est pas non plus possible d'indexer le boîtier sur des vis de fixation, qui introduiraient alors trop de dispersion dans sa mise en place.

Selon une disposition courante, on équipe souvent le boîtier de commande, de tampons amortisseurs, au droit de ses fixations. Les tampons isolent le boîtier, des vibrations de la caisse. Le boîtier se déplace par rapport à la caisse, du fait des remontées vibratoires, et des déplacements qui lui sont imposés sous l'effort de passage des vitesses. Si les indexeurs sont intégrés au boîtier, l'indexage est par principe antinomique avec le besoin d'isolation entre le boîtier et la caisse. Enfin, dans le cas fréquent, où le boîtier est en matière plastique, avec des indexeurs issus de la même matière, ces derniers sont trop fragiles pour absorber sans risque de casse, les efforts transitant par le boîtier.

Pour corriger ce problème, on a déjà envisagé de renoncer à toute forme d'indexage. La suppression des indexeurs interdit la mise en géométrie du boîtier de commande, par rapport à la caisse. Si les tampons amortisseurs sont dimensionnés pour garantir le montage dans tous les cas, malgré la dispersion de position des vis sur la caisse (par exemple avec un jeu d'environ 1.6mm), il est impossible de venir indexer le boîtier de commande sur les vis.

La présente invention vise à assurer l'indexage d'un boîtier de commande sur un élément de structure, sans perturber l'isolation vibratoire du boîtier.

Dans ce but, elle propose que la partie cylindrique du boîtier se prolonge radialement à sa base par une partie plane d'appui sur l'élément de structure, jusqu'à un doigt d'indexage sur l'élément de structure, intégré à son extrémité.

De préférence, la partie plane du collet intègre une excroissance d'indexage sur le tampon élastomère.

Le boîtier de commande proposé, comporte au moins un système de fixation, sur un élément de structure de véhicule.

Lors du montage du boîtier sur l'élément de structure, les doigts d'indexage, qui sont intégrés aux systèmes de fixation du boîtier, sont reçus dans des orifices d'indexage de l'élément de structure ; ces orifices sont déportés par rapport aux orifices de fixation correspondants.

D'autres caractéristiques et avantages de l'invention seront mieux compris à la lecture de la description suivante d'un mode de réalisation non limitatif de celle-ci, en se reportant aux dessins annexés sur lesquels :
- les figures 1 et 2 illustrent un montage connu,
- les figures 3 et 4 se rapportent à l'invention,
- la figure 5 est une vue de dessus d'un pied de fixation du boîtier,
- la figure 6 un agrandissement du système de fixation proposé, et
- la figure 7 une vue de dessous de l'élément de structure après montage du boîtier.

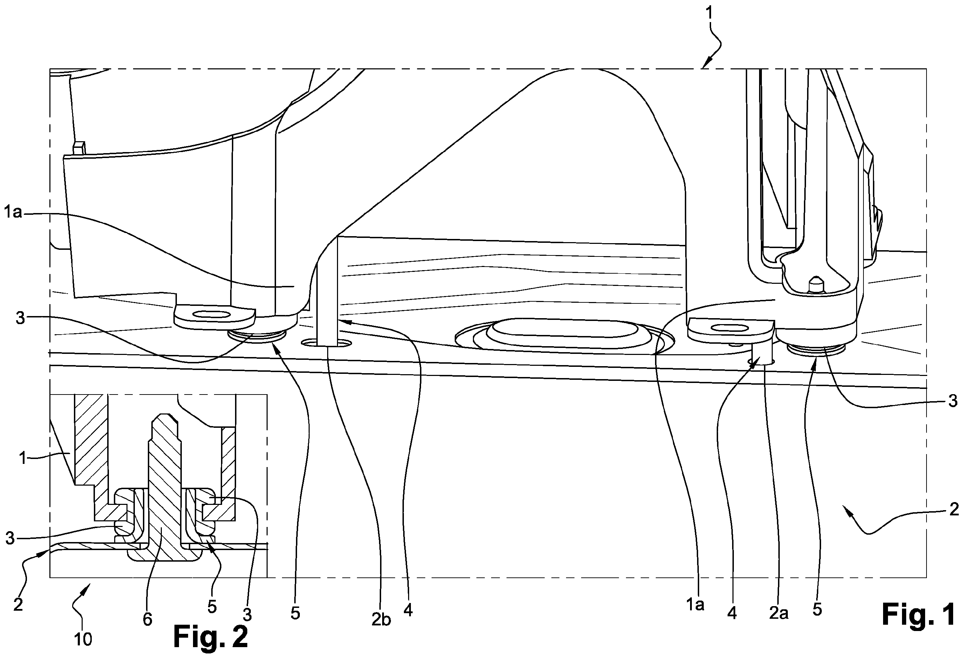

La figure 1 montre en partie un boîtier de commande de vitesses 1 de véhicule, monté sur un renfort de caisse 2 longitudinal. Le boîtier est réalisé par exemple en matière plastique. Il s'étend à l'intérieur de l'habitacle, et supporte un levier (ou sélecteur) de vitesses (non représenté) à disposition du conducteur « au plancher », sur son poste de conduite. Il renferme aussi des éléments de liaison (également non représentés), du levier avec la « commande externe » de la boîte de vitesses.

Sur le schéma, on voit apparaître entre le boîtier 1 et l'élément 2 : deux tampons amortisseurs 3, de préférence en élastomère, le boîtier, ainsi que deux doigts d'indexage 4 issus du boîtier 1. L'un deux traverse sans jeu un orifice de fixation 2a du renfort de caisse. L'autre s'étend au travers d'un orifice d'indexage allongé 2b dans la direction longitudinale du renfort, facilitant le montage du boîtier sur celui-ci.

Aux pieds du boîtier 1, entre les tampons 3 et le renfort de caisse 2, on distingue le bord d'un collet 5, de préférence métallique, dont la forme est révélée par la coupe de la figure 2. Cette coupe met en évidence la structure d'un des quatre systèmes de fixation du boîtier sur le renfort. La coupe passe par le boîtier de commande 1, la caisse 2 le collet métallique 5 et une vis de fixation 6. Les vis 6 sont introduites initialement par le dessous sur le renfort de caisse, en attente des pieds la du boîtier. Lors du montage, le boîtier 1 est muni, à chacun de ses pieds 1a, d'un système de fixation 10, composé du collet métallique 5 et du tampon 3 élastomère inséré entre le collet et le pied la. Chaque pied est présenté sur une tête de vis 6a, orientée vers le haut. On procède ensuite au vissage. Les problèmes rencontrés avec ce type d'installation viennent de l'antinomie entre le blocage en position des doigts d'indexage 4 sur le renfort de caisse, et le débattement du boîtier. Le débattement, qui est permis par les tampons antivibratoires 3, est déconnecté des doigts d'indexage 4. Cette déconnexion peut conduire à la casse des doigts d'indexage, en cas de forte sollicitation mécanique ou vibratoire du boîtier.

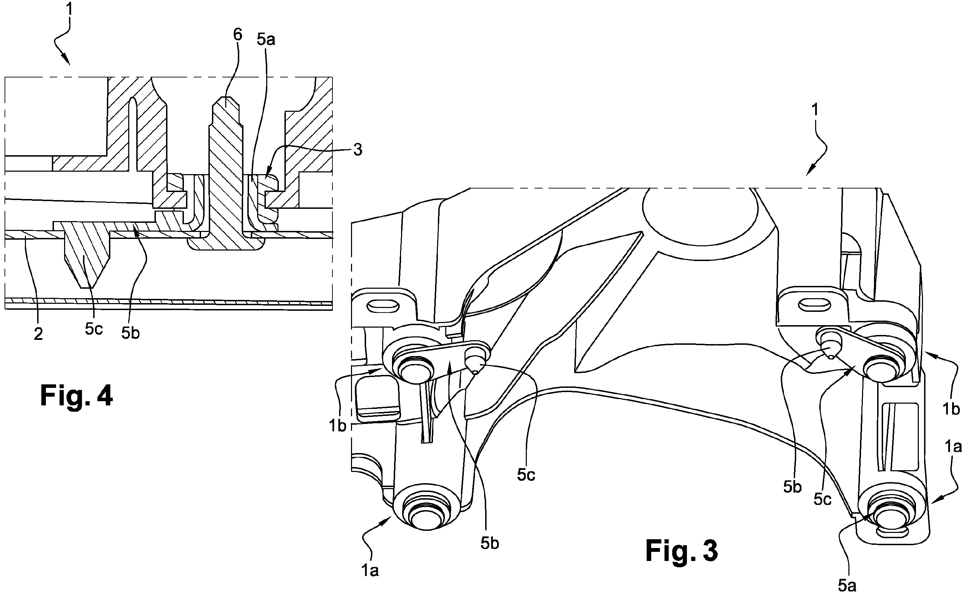

En résumé, ce système de fixation, comprend un collet métallique 5 de réception d'une vis de fixation 6 au travers d'un orifice de fixation 1c de l'élément de structure, comportant une partie cylindrique 5a insérée dans un tampon amortisseur de vibrations 3 logé à l'intérieur du boîtier 1. L'évolution proposée par l'invention porte sur ce système de fixation du boîtier sur l'élément de structure 2, au niveau de ses pieds la. Elle est illustrée par les figures 3 à 6.

La figure 3 montre en vue de dessous un boîtier de commande de vitesses 1, avec quatre pieds de fixation sur un élément de structure du véhicule 2, tel qu'un renfort de caisse (non représenté). Chaque pied porte un système de fixation. Le boîtier proposé, comporte au moins un système de fixation conforme à l'invention, de préférence deux, sur un élément de structure 2 de véhicule. Le boîtier présente au moins un, de préférence deux, pieds de fixation 1b sur un élément de structure de véhicule comportant un système de fixation conforme à l'invention.

Deux des quatre systèmes de fixation du boîtier, sont semblables à la figure 2. Les deux autres, sont conformes à l'invention. Le collet métallique 5 introduit dans le tampon amortisseur 3 est différent. Il présente comme précédemment une partie cylindrique 5a autour de laquelle est inséré le tampon 3. Toutefois, la partie 5a cylindrique du boîtier se prolonge radialement à sa base par une partie plane d'appui 5b sur l'élément de structure 2 jusqu'à un doigt d'indexage 5c sur l'élément de structure 2, intégré à son extrémité.

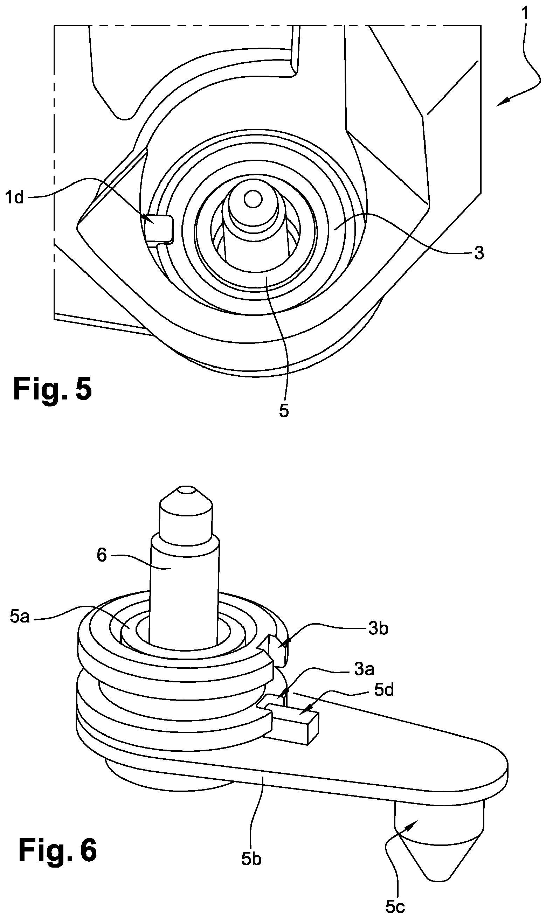

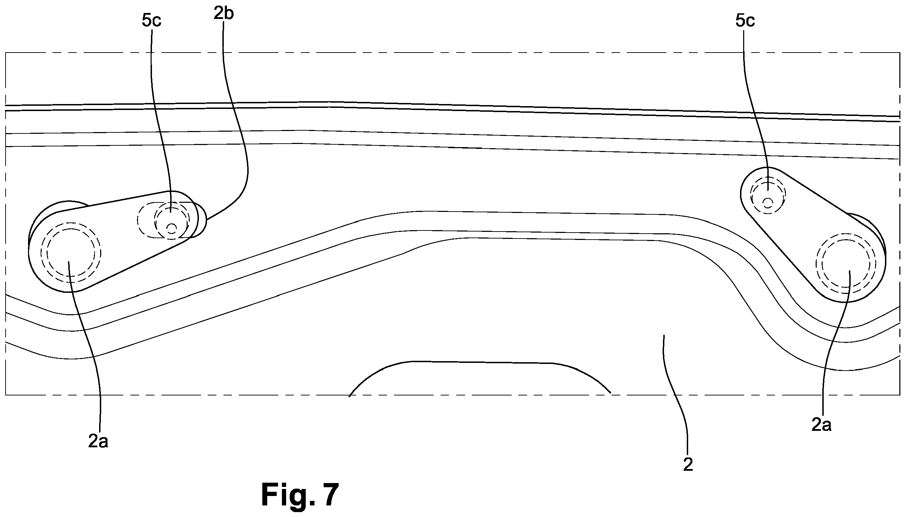

Conformément à l'invention, les doigts d'indexage intégrés 5c, portés par les collets métalliques, sont dissociés du boîtier de commande. Le doigt d'indexage intégré 5c s'étend au montage au travers d'un orifice d'indexage 2b, (visible sur la vue de dessous de la figure 7), qui est distant du trou de vissage 2a de la vis 6. Le doigt intégré 5c est orienté perpendiculairement à la patte 5a, en direction opposée du pied 1b, c'est-à-dire vers le renfort de caisse 2. La partie plane 5b du collet, intègre une excroissance 5d d'indexage sur le tampon élastomère 3. Cet excroissance, ou ergot, est visible sur la figure 5. Elle coopère avec une des encoches 3a découpées dans l'élastomère du tampon 3, visible sur la figure 6 : le tampon d'amortissement 3 présente au moins une découpe d'indexation 3a sur l'excroissance 5d du collet. Le tampon 3 est lui-même indexé sur le boîtier 1 par sa découpe 3b, qui coopère avec l'ergot 1d du boîtier (cf. figure 5). Grâce à ce double indexage, la patte 5b du collet est orientée automatiquement en direction de l'orifice d'indexage 2b du renfort de caisse, par exemple dans la disposition illustrée par la vue de dessous de la figure 7.

Le montage du boîtier s'effectue sans nécessiter l'ajustement en position des doigts d'indexage 5c par l'opérateur. Comme précédemment, les quatre systèmes de fixation (comprenant un collet métallique 5 et un tampon 3 élastomère inséré entre le collet et le pied), sont présentés sur les têtes de vis 6a, orientées dans cet exemple vers le haut, avant de procéder au vissage. Les pieds de fixation 1a, 1b du boîtier sont reçus sur les vis 6 orientées ici le haut, au travers d'orifices de fixation 2a de l'élément de structure. Les doigts d'indexage 5) intégrés aux systèmes de fixation du boîtier sont reçus dans des orifices d'indexage 2b de l'élément de structure 2, déportés par rapport aux orifices de fixation correspondants. Deux d'entre eux ne participent pas à l'indexage, qui est assuré, conformément à l'invention, par les deux autres. Le boîtier est orienté le boîtier correctement sur la caisse, et bien isolé. Lors de remontées vibratoires de la caisse, ou en cas d'efforts importants imposés par le levier de vitesses, le boîtier peut débattre de manière contrôlée sur le renfort de caisse grâce aux tampons d'amortissement, sans que ces mouvements soient reportés sur ses moyens d'indexage.

Le montage peut également s'effectuer dans le cas où la caisse du véhicule est équipée d'écrous de fixation, ce qui implique que les vis soient orientées vers le bas, et non vers le haut.

Le montage s'effectue sur un tunnel de caisse en U inversé, ou sur un renfort de caisse, rapporté sur celle-ci.

## Revendications

1. Système de fixation, d'un boîtier (1) sur un élément de structure (2), comportant un collet métallique (5) de réception d'une vis de fixation (6) au travers d'un orifice de fixation (1c) de l'élément de structure, qui comprend une partie cylindrique (5a) insérée dans un tampon amortisseur de vibrations (3) logé à l'intérieur du boîtier (1), **caractérisé en ce que** la partie (5a) cylindrique du boîtier (1) se prolonge radialement à sa base par une partie plane d'appui (5b) sur l'élément de structure (2) jusqu'à un doigt d'indexage (5c) sur l'élément de structure (2), intégré à son extrémité.

2. Système de fixation selon la revendication 1, **caractérisé en ce que** la partie plane (5b) du collet intègre une excroissance (5d) d'indexage sur le tampon élastomère (3).

3. Système de fixation selon la revendication 2, **caractérisé en ce que** le tampon d'amortissement (3) présente au moins une découpe d'indexation (3a) sur l'excroissance (5d) du collet (5).

4. Système de fixation selon la revendication 2 ou 3, **caractérisé en ce que** le tampon d'amortissement (3) présente au moins une découpe d'indexation (3b) sur le boîtier (1).

5. Boîtier de commande de vitesses, **caractérisé en ce qu'**il comporte au moins un système de fixation, conforme à l'une des revendications 1 à 4, sur un élément de structure (2) de véhicule.

6. Boîtier de commande de vitesses selon la revendication 5, **caractérisé en ce qu'**il présente au moins un pied de fixation (1b) sur un élément de structure de véhicule comportant un système de fixation conforme à l'une des revendications 1 à 4.

7. Boîtier de commande de vitesses selon la revendication 5 ou 6, **caractérisé en ce qu'**il comporte au moins deux systèmes de fixation conformes à l'une des revendications 1 à 4.

8. Procédé de montage d'un boîtier de commande de vitesses conforme à la revendication 6 ou 7, dont les pieds de fixation (1a, 1b) sont reçus sur des vis (6) au travers d'orifices de fixation (2a) d'un élément de structure (2) de véhicule, **caractérisé en ce que** les doigts d'indexage (5c) intégrés aux systèmes de fixation du boîtier sont reçus dans des orifices d'indexage (2b) de l'élément de structure (2), déportés par rapport aux orifices de fixation (2a) correspondants.

9. Procédé de montage d'un boîtier de commande de vitesses selon la revendication 8, **caractérisé en ce que** les pieds de fixation (1a, 1b) sont reçus sur des vis (6) orientées vers le haut.

10. Procédé de montage d'un boîtier selon la revendication 8 ou 9, **caractérisé en ce qu'**il s'effectue sur un tunnel de caisse en U inversé.

11. Procédé de montage selon la revendication 8 ou 9, **caractérisé en ce qu'**il s'effectue sur un renfort de caisse.

## Patentansprüche

1. System zur Befestigung eines Gehäuses (1) an einem Strukturelement (2), aufweisend einen Metallkragen (5) zur Aufnahme einer Befestigungsschraube (6) durch eine Befestigungsöffnung (1c) des Strukturelements, das einen zylinderförmigen Abschnitt (5a) umfasst, der in einen Vibrationsdämpfungspuffer (3) eingeführt ist, der innerhalb des Gehäuses (1) aufgenommen ist, **dadurch gekennzeichnet, dass** sich der zylinderförmige Abschnitt (5a) des Gehäuses (1) an seiner Basis durch einen planen Abschnitt zur Auflage (5b) auf dem Strukturelement (2) bis zu einem Indexierungsfinger (5c) auf dem Strukturelement (2), das an dessen Ende integriert ist, radial fortsetzt.

2. Befestigungssystem nach Anspruch 1, **dadurch gekennzeichnet, dass** der plane Abschnitt (5b) des Kragens einen Vorsprung zur Indexierung (5d) auf dem Elastomerpuffer (3) integriert.

3. Befestigungssystem nach Anspruch 2, **dadurch gekennzeichnet, dass** der Dämpfungspuffer (3) mindestens einen Ausschnitt zur Indexierung (3a) auf dem Vorsprung (5d) des Kragens (5) aufweist.

4. Befestigungssystem nach Anspruch 2 oder 3, **dadurch gekennzeichnet, dass** der Dämpfungspuffer (3) mindestens einen Ausschnitt zur Indexierung (3b) auf dem Gehäuse (1) aufweist.

5. Getriebesteuergehäuse, **dadurch gekennzeichnet, dass** es mindestens ein System zur Befestigung, nach einem der Ansprüche 1 bis 4, an einem Fahrzeug-Strukturelement (2) aufweist.

6. Getriebesteuergehäuse nach Anspruch 5, **dadurch gekennzeichnet, dass** es mindestens einen Fuß zur Befestigung (1b) an einem Fahrzeug-Strukturelement aufweist, aufweisend ein Befestigungssystem nach einem der Ansprüche 1 bis 4.

7. Getriebesteuergehäuse nach Anspruch 5 oder 6, **dadurch gekennzeichnet, dass** es mindestens zwei Befestigungssysteme nach einem der Ansprüche 1 bis 4 aufweist.

8. Verfahren zur Montage eines Getriebesteuergehäuses nach Anspruch 6 oder 7, dessen Befestigungsfüße (1a, 1b) an Schrauben (6) durch Befestigungsöffnungen (2a) eines Fahrzeugstrukturelements (2) aufgenommen sind, **dadurch gekennzeichnet, dass** die Indexierungsfinger (5c), die in die Befestigungssysteme des Gehäuses integriert sind, in Indexierungsöffnungen (2b) des Strukturelements (2) aufgenommen sind, die bezogen auf die entsprechenden Befestigungsöffnungen (2a) versetzt sind.

9. Verfahren zur Montage eines Getriebesteuergehäuses nach Anspruch 8, **dadurch gekennzeichnet, dass** die Befestigungsfüße (1a, 1b) an Schrauben (6) aufgenommen sind, die nach oben ausgerichtet sind.

10. Verfahren zur Montage eines Gehäuses nach Anspruch 8 oder 9, **dadurch gekennzeichnet, dass** es an einem Karosserietunnel in Form eines umgedrehten Us durchgeführt wird.

11. Montageverfahren nach Anspruch 8 oder 9, **dadurch gekennzeichnet, dass** es an einer Karosserieverstärkung durchgeführt wird.

## Claims

1. Fastening system for fastening a housing (1) to a structural element (2), comprising a metal collar (5) for receiving a fastening screw (6) through a fastening orifice (1c) in the structural element, which comprises a cylindrical portion (5a) inserted into a vibration-damping buffer (3) housed inside the housing (1), **characterized in that** the cylindrical portion (5a) of the housing (1) is extended radially at its base by a planar portion (5b) for bearing on the structural element (2) up to a finger (5c) for indexing on the structural element (2), integrated at its end.

2. Fastening system according to Claim 1, **characterized in that** the planar portion (5b) of the collar incorporates a protuberance (5d) for indexing on the elastomer buffer (3).

3. Fastening system according to Claim 2, **characterized in that** the damping buffer (3) has at least one cutout (3a) for indexing on the protuberance (5d) of the collar (5).

4. Fastening system according to Claim 2 or 3, **characterized in that** the damping buffer (3) has at least one cutout (3b) for indexing on the housing (1) .

5. Gear shift control housing, **characterized in that** it comprises at least one fastening system, according to one of Claims 1 to 4, for fastening to a vehicle structural element (2).

6. Gear shift control housing according to Claim 5, **characterized in that** it has at least one foot (1b) for fastening to a vehicle structural element comprising a fastening system according to one of Claims 1 to 4.

7. Gear shift control housing according to Claim 5 or 6, **characterized in that** it comprises at least two fastening systems according to one of Claims 1 to 4.

8. Method for mounting a gear shift control housing according to Claim 6 or 7, the fastening feet (1a, 1b) of which are received on screws (6) through fastening orifices (2a) in a vehicle structural element (2), **characterized in that** the indexing fingers (5c) integrated with the housing fastening systems are received in indexing orifices (2b) in the structural element (2) that are offset with respect to the corresponding fastening orifices (2a) .

9. Method for mounting a gear shift control housing according to Claim 8, **characterized in that** the fastening feet (1a, 1b) are received on upwardly oriented screws (6).

10. Method for mounting a housing according to Claim 8 or 9, **characterized in that** it is carried out on an inverted-U body tunnel.

11. Mounting method according to Claim 8 or 9, **characterized in that** it is carried out on a body reinforcement.
